(19) Europäisches Patentamt
European Patent Office
Office européen des brevets

(11) **EP 4 375 937 A1**

(12) **EUROPEAN PATENT APPLICATION**

(43) Date of publication:
**29.05.2024 Bulletin 2024/22**

(21) Application number: **22209881.6**

(22) Date of filing: **28.11.2022**

(51) International Patent Classification (IPC):
**G06T 11/00** $^{(2006.01)}$

(52) Cooperative Patent Classification (CPC):
**G06T 11/006;** G06T 11/005; G06T 11/008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **BRENDEL, Bernhard Johannes**
  **Eindhoven (NL)**
• **SCHÄFER, Dirk**
  **Eindhoven (NL)**

(74) Representative: **Philips Intellectual Property & Standards**
**High Tech Campus 52**
**5656 AG Eindhoven (NL)**

(54) **APPARATUS FOR GENERATING A 3D CONE BEAM CT IMAGE**

(57) The present invention relates to an apparatus (10) for estimation of Hounsfield unit values for voxels of a 3D cone beam CT image, the apparatus comprising:
- a processing unit (20); and
- an output unit (30).

A 3D cone beam CT image comprises voxels with associated attenuation coefficient values. The processing unit is configured to calculate a histogram of at least some of the voxels of the 3D cone beam CT image representing a number of voxels having specific attenuation coefficient values or specific ranges of attenuation coefficient values. The processing unit is configured to identify a specific attenuation coefficient value or specific range of attenuation coefficient values associated with a first feature representative of a part of the 3D cone beam CT image, wherein the first feature is air or soft tissue or bone, and wherein the identification comprises utilization of the histogram. The processing unit is configured to determine an attenuation value to Hounsfield Unit converter, wherein the determination of the attenuation value to Hounsfield Unit converter comprises utilization of a correlation between the specific attenuation coefficient value or specific range of attenuation coefficient values associated with the first feature with a Hounsfield Unit for the first feature. The processing unit is configured to transform attenuation coefficient values of voxels in the 3D cone beam CT image to Hounsfield Units based on the attenuation value to Hounsfield Unit converter. The output unit is configured to output information relating to Hounsfield units of voxels of the 3D cone beam CT image.

FIG. 1

**Description**

FIELD OF THE INVENTION

The present invention relates to an apparatus for generating a 3D cone beam CT image, a method for generating a 3D cone beam CT image, a computer program element, and a computer readable medium.

BACKGROUND OF THE INVENTION

It is known to reconstruct a 3D image from a sequence of X-ray projection images, for example images that are acquired during a rotational scan of a C-arm imaging apparatus. During such reconstruction, the path length of X-ray attenuation (i.e., the line integral) along each measured ray has to be known. To convert measured intensities to line integral values, in many cases the approximation of the mono-energy Beer-Lambert law is used:

$$I = I_0 \cdot e^{-\mu l}$$

where $I$ is the measured intensity, $I_0$ is the intensity that would have been measured without any attenuation in the X-ray beam (primary intensity), and $\mu l$ is the line integral needed for reconstruction. The line integral can then be derived from the measurements by

$$\mu l = -\ln\left(\frac{I}{I_0}\right).$$

The primary intensity cannot be directly measured during the scan of the object, but has to be derived by other means, underpinned by calibration scans. It should be noted that the primary intensity varies during the 3D scan, since commonly the X-ray flux is modulated during the scan to reduce patient dose. Thus, for each detector pixel and each acquired projection the primary flux or intensity has to be determined. This requires, apart from the implementation effort, also calibration procedures that are carried out regularly.

This effort is avoided in some cases, where the primary intensities are unknown and the line integral values for 3D reconstruction are calculated with a rough approximation for $I_0$. Since the calculation of the line integral values, as detailed in the equation above, can also be written as $\mu l = -\ln(I) + \ln(I_0)$, the usage of an approximate $I_0$ leads to an offset error in the calculated line integrals (detector signal saturation is neglected here). If at least the $I_0$ variations over the detector within a projection are corrected in the measured data (i.e., a gain correction is performed), the offset errors of the line integrals are roughly constant within each acquired projection but vary from projection to projection due to the X-ray flux variations as discussed above.

The unknown offset errors of the line integrals described above lead in effect to an unknown cap-shaped offset of the values in the reconstructed images (capping artifact). Thus, the value scale of a reconstructed image does not correspond to the correct Hounsfield Unit (HU) value scale, but can vary strongly from scan to scan depending on the selected flux level and the shape of the scanned object due to the X-ray flux modulation.

The variation of the image value scale poses problems to the visualization of the images in a clinical setting, since ideally image values like, e.g., those representing soft tissue, air, and bone, should be presented in similar gray values for all scans, to avoid the necessity of manual tuning of the visualization for each scan by the physician.

A very simple visualization approach like, e.g., min-max-scaling, will fail because images often comprise different objects with higher attenuation coefficient than soft tissue or bone, which lead to extremely high and/or low image values in reconstruction.

There is a need to address these problems.

SUMMARY OF THE INVENTION

It would be advantageous to have an improved technique for generating a 3D cone beam CT image, whereby in particular the reconstructed image may show improved consistency between different scans. The object of the present invention is solved with the subject matter of the independent claims, wherein further embodiments are incorporated in the dependent claims.

In a first aspect, there is provided an apparatus for generating a 3D cone beam CT image, the apparatus comprising:

- a processing unit; and
- an output unit.

A 3D cone beam CT image comprises voxels with associated attenuation coefficient values. The processing unit is configured to identify a specific attenuation coefficient value or specific range of attenuation coefficient values associated with a first feature represented in a part of the 3D cone beam CT image.. The processing unit is configured to determine a transformation of an attenuation value to a transformed voxel value. The transformation comprises utilization of a correlation between the specific attenuation coefficient value or specific range of attenuation coefficient values associated with the first feature with a predetermined transformed voxel value representative of the first feature. The processing unit is configured to transform attenuation coefficient values of voxels in the 3D cone beam CT image to transformed voxel values based on said transformation. The output unit is configured to output information relating to transformed voxel values of the 3D cone beam CT image.

In this manner, the effect of a change in the baseline intensity of the x-ray source for different views through an object can be mitigated enabling final imagery to be represented in a transformed scale, where the same features, such as soft tissue, air or bone, are represented with equivalent voxel values in the imagery providing a viewer of the imagery with a much easier image set to analyze. In certain examples, the attenuation coefficient values of the original 3D cone beam CT image are transformed into voxel values according to the Hounsfield scale, hereinafter also referred to as Hounsfield Unit (HU) values. HU values are well established for a number of different tissue types and materials, as is known in the art.

In certain examples, the first feature may be air or soft tissue or bone, for each of which representative HU values are well established in the art.

In certain examples, for identifying the specific attenuation coefficient value of specific range of attenuation coefficient values, the processing unit is configured to calculate a histogram of at least some of the voxels of the 3D cone beam CT image having the specific attenuation coefficient values or the specific ranges of attenuation coefficient values associated with the first feature, the identification comprising utilization of the histogram.

Alternatively, the identification of voxels associated with the first feature, e.g. soft tissue or bone, may be achieved by a machine learning algorithm suitably trained to recognize image structures corresponding to the first feature within the 3D image data.

It is to be noted that in certain situations the histogram can be calculated for all of the voxels of the 3D cone beam CT image, for example where the image is of a high enough quality.

For example by identifying voxels associated with soft tissue in the 3D image using the histogram, these pixels can then be associated with a known value of Hounsfield Unit for soft tissue and the whole 3D image can be transformed accordingly.

In an example, the identification of the specific attenuation coefficient value or specific range of attenuation coefficient values associated with a first feature comprises a determination of a local maximum in the histogram. Thus, a histogram of attenuation values in the 3D image showing peaks for air, soft tissue and/or bone may be used to identify air/soft tissue/bone accordingly. Then, for example, a known Hounsfield Unit value representative of the identified features from the group comprising air, soft tissue and bone can be assigned to associated voxels and the image voxel values as a whole can be transformed accordingly.

In an example, the processing unit is further configured to identify a specific attenuation coefficient value or specific range of attenuation coefficient values associated with a second feature representative of a part of the 3D cone beam CT image different to the first feature. Again, a transformation of an attenuation value for the second feature to a transformed voxel value may comprise utilization of a correlation between the specific attenuation coefficient value or specific range of attenuation coefficient values associated with the second feature with a Hounsfield Unit for the second feature.

In certain examples, the second feature may be a material taken from the group comprising air, soft tissue and bone, different than the material corresponding to the first feature.

The identification may comprise utilization of the histogram. In an example, the identification of the specific attenuation coefficient value or specific range of attenuation coefficient values associated with the second feature comprises a determination of a second local maximum in the histogram. Alternatively, such identification may be achieved by a machine learning algorithm suitably trained to recognize image structures corresponding to the second feature within the 3D image data.

In an embodiment, a first part of the histogram, for example a local maximum, can be associated with a first feature, for example soft tissue, and a Hounsfield Unit for soft tissue correlated with the voxels at the local maximum. A second part of the histogram, for example a second local maximum, can be associated with a second feature, for example air, and a Hounsfield Unit for air correlated with the voxels at the second local maximum. The whole image can then be transformed to provide transformed voxel values corresponding to HU values consistent with correct Figs.

Thus, while previously, as X-ray beam intensity variations occurred, features such as bone could be represented having different Hounsfield Units in different cases, making visualization difficult, in accordance with the present disclosure bone may be assigned in effect the same Hounsfield Unit in these different cases, facilitating consistent image visualization.

In an example, the 3D cone beam CT image is a processed 3D image of a reconstructed 3D cone beam CT image. The processing unit is configured to process the reconstructed 3D cone beam CT image to exclude one or more image slices that contain a substantial amount of metal.

In an example, prior to calculation of the histogram the processing unit is configured to smooth attenuation coefficient values of voxels, for example by applying a Gaussian filter to the 3D cone beam CT image data.

Accordingly, noise and/or artefacts are reduced and the peak or peaks in the histogram is/are sharpened.

In an example, prior to the identification of the specific attenuation coefficient value or specific range of attenuation coefficient values associated with the first feature and/or the second feature, the processing unit may exclude voxels having specific attenuation coefficient values or specific ranges of attenuation coefficient values at the lower and/or upper end of the histogram. For this purpose, for example, a lower and/or upper threshold may be applied, and voxels at the lower end of the histogram having an attenuation coefficient below the lower threshold, respectively voxels at the upper end of the histogram having an attenuation coefficient above the upper threshold, may be disregarded.

In this manner, even when metal is excluded, there can be voxels having attenuation values that are above that of soft tissue or bone and below that of air. These can be identified and excluded.

In an example, the determination of the transformation comprises utilization of a machine learning algorithm to associate voxels in the 3D cone beam CT image with air and correlate the specific attenuation coefficient value or specific range of attenuation coefficient values of the voxels associated with air with a Hounsfield Unit for air.

In a second aspect, there is provided a method for generating a 3D cone beam CT image comprising voxels with associated attenuation coefficient values, wherein the method comprises the steps of:

identifying a specific attenuation coefficient value or specific range of attenuation coefficient values associated with a first feature represented in a part of the 3D cone beam CT image;

determining a transformation of an attenuation value to a transformed voxel value comprising utilizing a correlation between the specific attenuation coefficient value or specific range of attenuation coefficient values associated with a predetermined transformed voxel value representative of the first feature; transforming attenuation coefficient values of voxels in the 3D cone beam CT image to transformed voxel values based on the transformation; and outputting information relating to the transformed voxel values of the 3D cone beam CT image.

In a further aspect, there is provided a computer program element for controlling an apparatus according to the first aspect which when executed by a processor is configured to carry out the method of the second aspect.

According to another aspect, there is provided computer readable media having stored the computer elements as previously described.

The computer program element can for example be a software program but can also be a FPGA, a PLD or any other appropriate digital means.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawing:

Fig. 1 shows an example of an apparatus according to a first aspect;
Fig. 2 shows an example of a method according to a second aspect;
Fig. 3 shows an exemplary histogram of an image;
Fig. 4 shows examples of images of objects shown in Hounsfield Units prior to operation of the new technique; and
Fig. 5 shows examples of images of the objects as shown in Fig. 4 shown in Hounsfield Units after operation of the new technique.

DETAILED DESCRIPTION OF EMBODIMENTS

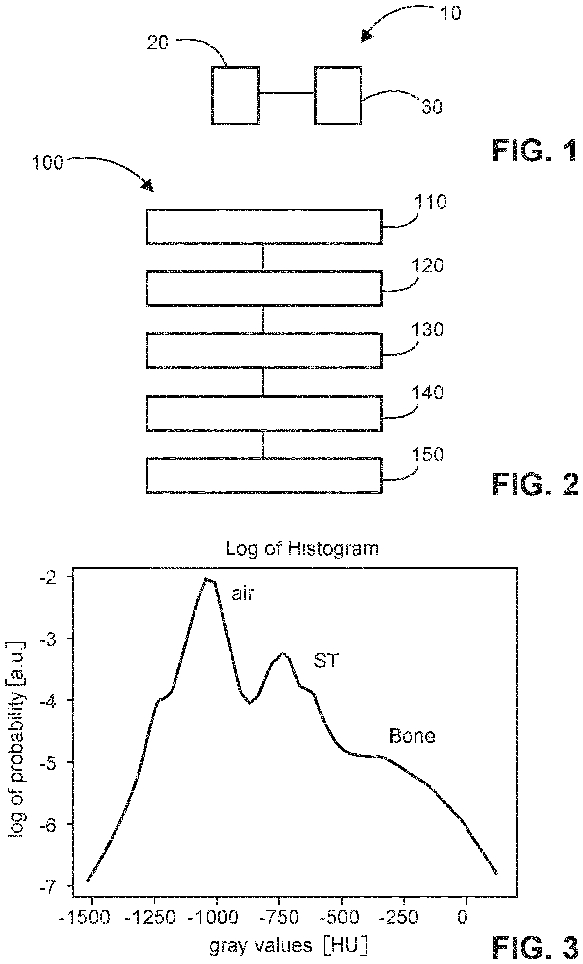

Fig. 1 shows an example of an apparatus 10 for generating a 3D cone beam CT image. The apparatus comprises a processing unit 20, and an output unit 30. The processing unit is provided with a 3D cone beam CT image that comprises voxels with associated attenuation coefficient values. The processing unit is configured to identify a specific attenuation coefficient value or a specific range of attenuation coefficient values associated with a first feature represented in a part of the 3D cone beam CT image, to determine a transformation of an attenuation value to a transformed voxel value, the transformation comprising utilization of a correlation between the specific attenuation coefficient value or specific range of attenuation coefficient values associated with the first feature with a predetermined transformed voxel value representative of the first feature, to transform attenuation coefficient values of voxels in the 3D cone beam CT image to transformed voxel values based on the transformation. The output unit is configured to output information relating to the transformed voxel values of the 3D cone beam CT image.

In this manner, the effect of a change in the baseline intensity of the x-ray source for different views through an object can be mitigated enabling final imagery to be represented in transformed voxel values, for example Hounsfield Units, where the same features, such as soft tissue or bone, are represented with equivalent values in the imagery providing a viewer of the imagery with a much easier image set to analyze.

For example by identifying voxels associated with soft tissue in the 3D image, these pixels can then be associated with a known value of Hounsfield Unit for soft tissue and the whole 3D image can be transformed accordingly.

In an example, the output unit is configured to output a 3D cone beam CT image with voxels having Hounsfield units.

Thus, a new 3D cone beam CT image with transformed voxel value, for example HU values, can be outputted optionally along with the original 3D cone beam CT image. However, information about the conversion from attenuation values to Hounsfield units can be saved and output, and this information could be transferred along with the original 3D cone beam CT image, in a similar manner to what is done for example in standard dicom.

According to an example, the processing unit is configured to identify a specific attenuation coefficient value or specific range of attenuation coefficient values associated with a second feature representative of a part of the 3D cone beam CT image different to the first feature. The second feature is air or soft tissue or bone. The identification of the specific attenuation coefficient value or specific range of attenuation coefficient values associated with the second feature comprises utilization of the histogram. The determination of the attenuation value to Hounsfield Unit converter can then comprise utilization of a correlation between the specific attenuation coefficient value or specific range of attenuation coefficient values associated with the second feature with a Hounsfield Unit for the second feature.

In this manner, a first part of the histogram, for example a local maximum, can be associated with a first feature, for example soft tissue, and a Hounsfield Unit for soft tissue correlated with the voxels at the local maximum. A second part of the histogram, for example a second local maximum, can be associated with a second feature, for example air, and a Hounsfield Unit for air correlated with the voxels at the second local maximum. The whole image can then be transformed to provide corrected Hounsfield Units that are consistent with correct Figs. Thus, previously as X-ray beam intensity variations occurred features such as bone could be presented having different Hounsfield Units in different cases, making visualization difficult, but now bone is assigned in effect the same Hounsfield Unit in these different cases, facilitating consistent image visualization.

According to an example, the identification of the specific attenuation coefficient value or specific range of attenuation coefficient values associated with the second feature comprises a determination of a second local maximum in the histogram.

According to an example, the 3D cone beam CT image is a processed 3D image of a reconstructed 3D cone beam CT image. The processing unit is configured to process the reconstructed 3D cone beam CT image to exclude one or more image slices that contain a substantial amount of metal.

In an example, a slice is excluded when a number of voxels in the slice that contain metal are greater than a threshold number of the overall voxels of the slice. In an example, the threshold is 0.01%. In an example, the threshold is 0.02%. In an example, the threshold is 0.03%. In an example, the threshold is 0.05%. In an example, the threshold is 0.1%. In an example, the threshold is 0.2%. In an example, the threshold is 0.5%. In an example, the threshold is 1%.

In this manner, image artifacts generated due to metal objects are inhibited.

Also, by excluding metal the peak or peaks in the histogram is/are sharpened.

According to an example, prior to calculation of the histogram the processing unit is configured to smooth attenuation coefficient values of voxels.

In this manner, by smoothing noise is reduced and the peak or peaks in the histogram is/are sharpened.

According to an example, the processing unit is configured to apply a Gaussian filter to the 3D cone beam CT image to smooth attenuation coefficient values of voxels.

According to an example, prior to the identification of the specific attenuation coefficient value or specific range of attenuation coefficient values associated with the first feature representative of a part of the 3D cone beam CT image the processing unit is configured to exclude voxels having specific attenuation coefficient values or specific ranges of attenuation coefficient values at the lower and/or upper end of the histogram.

In this manner, even when metal is excluded, there can be voxels having attenuation values that are above that of soft tissue or bone and below that of air. These can be identified and excluded.

According to an example, the processing unit is configured to apply a lower and/or upper threshold to exclude voxels having specific attenuation coefficient values or specific ranges of attenuation coefficient values at the lower and/or upper end of the histogram.

According to an example, the first feature is soft tissue or bone.

According to an example, the first feature is soft tissue.

According to an example, the determination of the attenuation value to Hounsfield Unit converter comprises utilization of a machine learning algorithm to associate voxels in the 3D cone beam CT image with air and corelate the specific attenuation coefficient value or specific range of attenuation coefficient values of the voxels associated with air with a Hounsfield Unit for air.

According to an example, the second feature is air.

Fig. 2 shows an example of a method 100 for estimation of Hounsfield unit values for voxels of a 3D cone beam CT image in its basic steps. A 3D cone beam CT image is provided that comprises voxels with associated attenuation coefficient values, and the method comprises:

calculating 110 by a processing unit a histogram of at least some of the voxels of the 3D cone beam CT image representing a number of voxels having specific attenuation coefficient values or specific ranges of attenuation coefficient values;

identifying 120 by the processing unit a specific attenuation coefficient value or specific range of attenuation coefficient values associated with a first feature representative of a part of the 3D cone beam CT image, wherein the first feature is air or soft tissue or bone, and wherein the identifying comprises utilizing the histogram;

determining 130 by the processing unit an attenuation value to Hounsfield Unit converter, wherein the determination of the attenuation value to Hounsfield Unit converter comprises utilizing a correlation between the specific attenuation coefficient value or specific range of attenuation coefficient values associated with the first feature with a Hounsfield Unit for the first feature;

transforming 140 by the processing unit attenuation coefficient values of voxels in the 3D cone beam CT image to Hounsfield Units based on the attenuation value to Hounsfield Unit converter; and

outputting 150 by an output unit information relating to Hounsfield units of voxels of the 3D cone beam CT image.

In an example, the method comprises outputting by the output unit a 3D cone beam CT image with voxels having Hounsfield units.

In an example, the identifying the specific attenuation coefficient value or specific range of attenuation coefficient values associated with a first feature comprises determining a local maximum in the histogram.

In an example, method comprises identifying by the processing unit a specific attenuation coefficient value or specific range of attenuation coefficient values associated with a second feature representative of a part of the 3D cone beam CT image different to the first feature, wherein the second feature is air or soft tissue or bone, and wherein the identifying comprises utilizing the histogram. The determining the attenuation value to Hounsfield Unit converter can comprise utilizing a correlation between the specific attenuation coefficient value or specific range of attenuation coefficient values associated with the second feature with a Hounsfield Unit for the second feature.

In an example, the identifying the specific attenuation coefficient value or specific range of attenuation coefficient values associated with the second feature comprises determining a second local maximum in the histogram.

In an example, the 3D cone beam CT image is a processed 3D image of a reconstructed 3D cone beam CT image, and the method comprises processing by the processing unit the reconstructed 3D cone beam CT image to exclude one or more image slices that contain a substantial amount of metal. In an example, prior to calculating the histogram the method comprises smoothing by the processing unit attenuation coefficient values of voxels.

In an example, the method comprises applying by the processing unit a Gaussian filter to the 3D cone beam CT image to smooth attenuation coefficient values of voxels.

In an example, prior to the identifying the specific attenuation coefficient value or specific range of attenuation coefficient values associated with the first feature representative of a part of the 3D cone beam CT image the method comprises excluding by the processing unit voxels having specific attenuation coefficient values or specific ranges of attenuation coefficient values at the lower and/or upper end of the histogram.

In an example, the method comprises applying by the processing unit a lower and/or upper threshold to exclude voxels having specific attenuation coefficient values or specific ranges of attenuation coefficient values at the lower and/or upper end of the histogram.

In an example, the first feature is soft tissue or bone.

In an example, the first feature is soft tissue.

In an example, the determining the attenuation value to Hounsfield Unit converter comprises utilizing a machine learning algorithm to associate voxels in the 3D cone beam CT image with air and corelate the specific attenuation coefficient value or specific range of attenuation coefficient values of the voxels associated with air with a Hounsfield Unit for air.

In an example, the second feature is air.

The apparatus for estimation of Hounsfield unit values for voxels of a 3D cone beam CT image and the method for estimation of Hounsfield unit values for voxels of a 3D cone beam CT image are now described with respect to specific embodiments, where reference is made to Figs. 3-5.

The new technique described here is based on a histogram of the reconstructed image. An example histogram for an image is shown in Fig. 3. Here attenuation coefficient values $\mu$, with an unknown value for $I_0$ the intensity that would have been measured with no attenuation, have been converted into Hounsfield Units, and the frequency or probability of a voxel having a specific Hounsfield Unit is shown - in effect the number of voxels having that Hounsfield Unit. As shown in Fig. 3, the histogram has a peak for soft tissue, a peak for bone, and a peak for air. Thus, the peak for soft tissue can be at an incorrect Hounsfield Unit for soft tissue, because $I_0$ was not known, and therefore the value of $\mu$ that was calculated for soft tissue that was then converted to a Hounsfield Unit is not exactly correct. But because the peak for soft tissue can be identified, then the Hounsfield Units for voxels at the soft tissue peak can be translated or transformed to a known "correct" value for soft tissue. The image as a whole can be translated or transformed similarly, and this can be done more accurately if a second peak of the histogram is also utilized, for example that for air, where the Hounsfield Units for air in the histogram can be corrected to a known "correct" value for air, and the image as a whole translated or transformed. Then images that would have been visualized, where Hounsfield Units for soft tissue and bone were different between images, when they should have been equivalent can now be shown with equivalent Hounsfield Units for the same feature - for example bone - across images, facilitating visualization and interpretation of images.

In developing the new technique a number of 3D CBCT datasets and associated histograms of images were reviewed, leading to a number of conclusions that were utilized. The values in the image values are the values of the actual voxel elements, in terms of $\mu$, but

because $I_0$ is not known, the value of $\mu$ is imperfect. The conclusions were:

Noise and metal artifacts lead to a significant smearing of features in the histogram.

If the noise in an image is reduced by smoothing, the smearing of histogram features is strongly reduced.

There are plenty of option to reduce noise in images, where a Gaussian filter was used for smoothing, but other methods could also work.

Regarding the smearing of histogram features with respect to noise, this can be explained as follows: If we consider a noiseless image, with a large constant image region (i.e., all voxels in that region have the same value), the voxels of this region will generate in the histogram as a very narrow peak (a "feature"). If the image is affected by strong noise the formerly constant image values now vary strongly, and thus generate in the histogram a quite wide peak, i.e., the feature is smeared.

By reducing the noise, you get back the narrow peak, and thus smoothing the image to reduce noise sharpens features within the histogram.

If image slices with strong metal artifacts are excluded from the histogram calculation, the smearing of histogram features is further reduced.

The reconstructed 3D cone beam CT image is a 3D grid of voxels. This can be also represented as a stack of 2D slices. The slices are orthogonal to the rotation axis of the cone beam CT scan.

It was established that metal objects generate strong image artifacts, especially within the image slice where they occur (if the image slice is orthogonal to the rotation axis of the cone beam CT scan as mentioned above).

Similarly to the situation described above with respect to noise in the image, these artifacts are in effect modifications of the image voxel values. Thus, as for the noise example above an image region with initially constant voxel values will no longer have constant voxel values if it is affected by a metal artifact, and the peak in the histogram is widened.

Therefore, by excluding slices with metal, features in the histogram are sharpened.

Even with smoothing and removal of metal slices there are often still voxels in the image with very low and very high values, leading to a histogram that covers a much wider value range than air, soft tissue and bone.

Thus, the histogram can still have very low and very high values, greater than soft flesh/bone and less than air, and these histogram values at the borders or ends of the histogram are excluded, where histogram entries at the beginning and the end of the histogram with values outside of low and high thresholds are excluded

The new technique was then developed, where the effect of variations in X-ray beam intensity can be solved by estimating from the reconstructed image itself the transformation to the HU scale. The new technique allows to automatically estimate an approximate HU-scale which is sufficient for many clinical applications of CBCT. A very detailed embodiment, where not all the steps are necessarily required, is detailed as follows that took into account the above conclusions:

Preprocess the reconstructed image

Exclude image slices that contain a substantial amount of metal

Here an image slice was excluded when the image slice had a defined number of voxels (e.g., 0.03% of all voxels belonging to the image slice) that represented metal. Other percentage values can be utilized.

Voxels that represent metal can be determined if the voxel values, $\mu$, are above a threshold value.

However, as detailed above, the $\mu$ values are imperfect. Therefore, a technique to identify metal in an image involved plotting a histogram as shown in Fig. 3, but where there is metal in the image a region is observed with higher attenuation values than bone, thus to the right hand side of the bone peak, and this enabled voxels with metal to be identified and the slices containing the metal voxels then excluded.

Smooth the image slices that remain
For example with Gaussian smoothing
Calculate a histogram of the preprocessed image
Calculate an initial histogram
Determine from the initial histogram a "relevant range" of image values
Exclude voxels with attenuation values in the histogram above a high threshold and below a low threshold.
Calculate a final histogram covering only the relevant range
Smooth the final histogram
Determine based on the histogram the image value of soft tissue

As shown in Fig. 3 there is a local maxima associated with soft tissue and this is identified as soft tissue and the center of the peak is assigned a known Hounsfield Unit value for soft tissue. This means that in effect the attenuation coefficient value $\mu$ for the voxels at the center of the soft tissue histogram peak are transformed to a "correct" known value of $\mu$ for soft tissue.

Determine based on the histogram the image value of air

Similarly, as shown in Fig. 3 there is a local maxima associated with air and this is identified as air and the center of the peak is assigned a known Hounsfield Unit value for air. This means that in effect the attenuation coefficient value $\mu$ for the voxels at the center of the air histogram peak are transformed to a "correct" known value of $\mu$ for air.

Use the image value(s) determined in the preceding steps 3 and 4 to transform the image values to correct HU values

It is to be noted that step 1 can in certain situations be excluded, as can steps 2b-d, as well as step 4 in that an image value of soft tissue or indeed bone can be utilized alone in step 5, and a second image value of air as detailed at step 4 may not be required. Indeed, a first image value can be soft tissue and a second image value bone, or bone and air can be utilized if two image values are utilized. Even a single peak of air in the histogram could be used to translate the air peak to a correct Hounsfield Unit and similarly translate all image values within the image.

The following discussion centers on the utilization of histogram values for soft tissue and air.

The metal removal and smoothing steps, in addition to the utilization of peaks in the histogram, resulted from the review of the datasets as described above. It was furthermore observed, that if the histogram is determined as described, the two highest maxima in the histogram correspond to air and soft tissue. It was observed that if only one clear maximum is available, it corresponds to soft tissue (cases with no / small air region in the image), and where the peak for bone is not as clear a peak as for soft tissue, but can still be identified and utilized if required. Thus, image values for soft tissue and potentially air can be easily determined by evaluating the maxima of the histogram. From these values a linear transformation of the image value scale to the HU scale can be done forcing the air value to -1000 HU and the soft tissue value to about 50 HU. If only a soft tissue value is available, the image value scale can simply be shifted by an offset to ensure a soft tissue value of about 50 HU. Alternatively, the missing air value can be estimated with other means, e.g., an AI based estimator, if enough annotated training data is available, and with enough data both soft tissue and air can be estimated, with an AI based estimator, that define the HU scale.

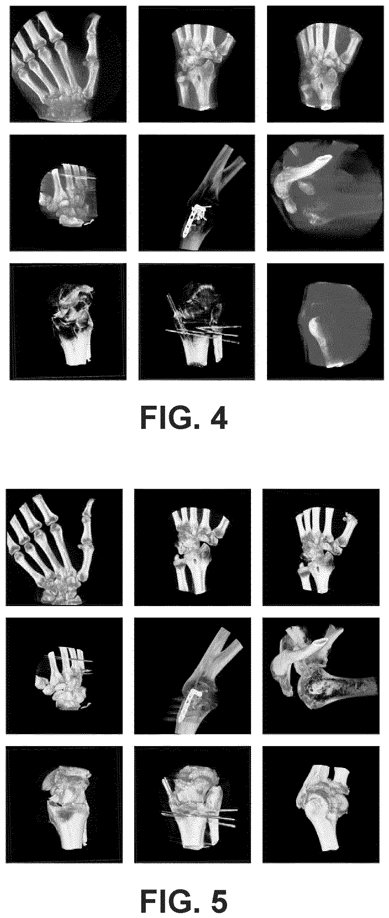

Figs. 4 and 5 illustrate the advantage of the new technique. Fig. 4 shows the visualization of a number of different cases with the initial window/level estimates of an exemplary viewer. The presentation of the data ranges from "bone not completely shown" (bottom left and center, middle center) to "soft tissue hides bones" (right middle and bottom). Thus, with no correction by the new technique presentation of the data sets ranges from cases where even the bone is not completely visualized to cases where soft tissue hides the bone structures almost completely. With respect to the datasets shown in Fig. 4, a physician would have to use their knowledge to manually tune such datasets in order to be able to interpret them. Fig. 5 shows a visualization of the same cases, where visualization parameters set for "bone segmentation" (opacity ramp ranges from soft tissue + 400HU to soft tissue + 2400 HU) have been automatically set based on the new technique described here. Clearly, the presentation of the data sets in Fig. 5 is now much more comparable among each other, making manual tuning obsolete.

It should be noted that the results in Fig. 5 are based on utilization of only one peak in the histogram, the soft tissue peak, which demonstrates that only one peak is required in order to improve HU scale estimation for this visualization task. Utilization of a second peak, for example that of air, in the histogram would then make the visualization more robust over the dynamic range of Hounsfield Units.

It is to be noted that the new technique is compatible with existing algorithms:
2D standard viewing is done e.g., in a bone window of L/W 800/2000 HU or in a soft tissue window of L/W 100/750 HU.

Threshold based algorithms, e.g., like metal artifact correction, can be applied as is or with minor adaptations.

Similar segmentation algorithms may benefit from a more reliable attenuation unit scale. In another exemplary embodiment, a computer program or computer program element is provided that is characterized by being configured to execute the method steps of any of the methods according to one of the preceding embodiments, on an appropriate apparatus or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items recited in the claims. The mere fact that certain measures are re-cited in mutually different dependent claims does not indicate that a combination of these measures cannot be used to advantage. Any reference signs in the claims should not be construed as limiting the scope.

**Claims**

1. An apparatus (10) for generating a 3D cone beam CT image, the apparatus comprising:

   - a processing unit (20); and
   - an output unit (30);

     wherein the 3D cone beam CT image comprises voxels with associated attenuation coefficient values;
     wherein the processing unit is configured to identify a specific attenuation coefficient value or a specific range of attenuation coefficient values associated with a first feature represented in a part of the 3D cone beam CT image;

     wherein the processing unit is configured to determine a transformation of an attenuation value to a transformed voxel value, the transformation comprising utilization of a correlation between the specific attenuation coefficient value or specific range of attenuation coefficient values associated with the first feature with a predetermined transformed voxel value representative of the first feature;
     wherein the processing unit is configured to transform attenuation coefficient values of voxels in the 3D cone beam CT image to transformed voxel values based on the transformation; and
     wherein the output unit is configured to output information relating to the transformed voxel values of the 3D cone beam CT image.

2. The apparatus of claim 1, wherein the processing unit is configured to calculate a histogram of at least some of the voxels of the 3D cone beam CT image having the specific attenuation coefficient values or the specific range of attenuation coefficient values, wherein an identification of the specific attenuation coefficient values or specific ranges of attenuation coefficient values associated with the first feature comprises utilization of the histogram.

3. Apparatus according to claim 2, wherein the identification of the specific attenuation coefficient value or specific range of attenuation coefficient values associated with a first feature comprises a determination of a local maximum in the histogram.

4. Apparatus according to any of the preceding claims, wherein the processing unit is further configured to identify a specific attenuation coefficient value or specific range of attenuation coefficient values associated with a second feature represented in a part of the 3D cone beam CT image, the second feature being different to the first feature, and
   wherein the transformation further comprises utilization of a correlation between the specific attenuation coefficient value or specific range of attenuation coefficient values associated with the second feature with a predetermined transformed voxel value representative of the second feature.

5. Apparatus according to claims 2 and 4, wherein an identification of the specific attenuation coefficient values or specific ranges of attenuation coefficient values associated with the second feature comprises utilization of the histogram.

6. Apparatus according to claim 5, wherein the identification of the specific attenuation coefficient value or specific range of attenuation coefficient values associated with the second feature comprises a determination of a second local maximum in the histogram.

7. Apparatus according to any preceding claim, wherein the first feature is a material taken from a group comprising air, soft tissue and bone, and the second feature is a different material taken from the group comprising air, soft tissue and bone.

8. Apparatus according to any preceding claim, wherein the transformed voxel value corresponds to a Hounsfield Unit (HU) value.

9. Apparatus according to any preceding claim, wherein the 3D cone beam CT image is a processed 3D image of a reconstructed 3D cone beam CT image, wherein the processing unit is configured to process the reconstructed 3D cone beam CT image to exclude one or more image slices that contain a substantial amount of metal.

10. Apparatus according to any one of claims 2-6, wherein prior to calculation of the histogram the processing unit is configured to apply a Gaussian filter to the 3D cone beam CT image to smooth attenuation coefficient values of voxels.

11. Apparatus according to any one of claims 2-6 or 10, wherein the processing unit is configured to, prior to the identification of the specific attenuation coefficient value or specific range of attenuation coefficient values, apply a lower and/or upper threshold to exclude voxels having specific attenuation coefficient values or specific ranges of attenuation coefficient values at the lower and/or upper end of the histogram.

12. Apparatus according to any one of the preceding claims, wherein the processing unit is configured to identify the specific attenuation coefficient values or specific ranges of attenuation coefficient values associated with the first feature and/or the second feature using a machine learning algorithm trained to recognize image structures corresponding to the first feature and/or the second feature within the 3D cone beam CT image.

13. A method (100) for generating a 3D cone beam CT image comprising voxels with associated attenuation coefficient values, wherein the method comprises the steps of:

    identifying (120) a specific attenuation coefficient value or specific range of attenuation coefficient values associated with a first feature represented in a part of the 3D cone beam CT image;
    determining (130) a transformation of an attenuation value to a transformed voxel value comprising utilizing a correlation between the specific attenuation coefficient value or specific range of attenuation coefficient values associated with a predetermined transformed voxel value representative of the first feature;
    transforming (140) attenuation coefficient values of voxels in the 3D cone beam CT image to transformed voxel values based on the transformation; and
    outputting (150) information relating to the transformed voxel values of the 3D cone beam CT image.

14. A computer program element for controlling an apparatus according to any of claims 1-12, which when executed by a processor is configured to carry out the method of claim 13.

15. A computer readable medium, having stored thereon a computer program element according to claim 14.

FIG. 1

FIG. 2

**Log of Histogram**

FIG. 3

FIG. 4

FIG. 5

Europäisches
Patentamt

European
Patent Office

Office européen
des brevets

# EUROPEAN SEARCH REPORT

Application Number

EP 22 20 9881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/205737 A1 (KUNZE HOLGER [DE] ET AL) 28 August 2008 (2008-08-28) * abstract * * Summary * * paragraph [0071] – paragraph [0087] * ----- | 1-15 | INV. G06T11/00 |
| X | WO 2014/205423 A1 (O N DIAGNOSTICS LLC [US]) 24 December 2014 (2014-12-24) * abstract * * paragraph [0012] – paragraph [0040] * * paragraph [0061] – paragraph [0112] * ----- | 1,13-15 | |
| X | EP 2 072 081 A1 (TOSHIBA KK [JP]; TOSHIBA MEDICAL SYS CORP [JP]) 24 June 2009 (2009-06-24) * abstract * * paragraph [0114] – paragraph [0191] * ----- | 1,13-15 | |
| A | EIJNATTEN MAUREEN VAN ET AL: "The impact of manual threshold selection in medical additive manufacturing", INTERNATIONAL JOURNAL OF COMPUTER ASSISTED RADIOLOGY AND SURGERY, SPRINGER, DE, vol. 12, no. 4, 7 October 2016 (2016-10-07), pages 607-615, XP036195798, ISSN: 1861-6410, DOI: 10.1007/S11548-016-1490-4 [retrieved on 2016-10-07] * the whole document * ----- | 1-15 | TECHNICAL FIELDS SEARCHED (IPC) G06T |
| A | WO 2013/003533 A1 (UNIV TEXAS [US]; MAH PETER [US]; MCDAVID W DOSS [US]) 3 January 2013 (2013-01-03) * the whole document * ----- | 1-15 | |

The present search report has been drawn up for all claims

| Place of search | Date of completion of the search | Examiner |
|---|---|---|
| Munich | 9 May 2023 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 9881

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | | Publication date | Patent family member(s) | | Publication date |
|---|---|---|---|---|---|
| US 2008205737 | A1 | 28-08-2008 | NONE | | |
| WO 2014205423 | A1 | 24-12-2014 | EP | 3010418 A1 | 27-04-2016 |
| | | | EP | 3597109 A2 | 22-01-2020 |
| | | | US | 2014376701 A1 | 25-12-2014 |
| | | | US | 2018228461 A1 | 16-08-2018 |
| | | | WO | 2014205423 A1 | 24-12-2014 |
| EP 2072081 | A1 | 24-06-2009 | EP | 2072081 A1 | 24-06-2009 |
| | | | US | 2009161818 A1 | 25-06-2009 |
| WO 2013003533 | A1 | 03-01-2013 | US | 2015164464 A1 | 18-06-2015 |
| | | | WO | 2013003533 A1 | 03-01-2013 |

EPO FORM P0459

For more details about this annex : see Official Journal of the European Patent Office, No. 12/82